# EUROPEAN PATENT APPLICATION

(11) **EP 4 568 326 A1**
(43) Date of publication of application: **11.06.2025**
(21) Application number: 23834831.2
(22) Date of filing: 04.07.2023
(51) Int. Cl.: H04W 24/08

(54) **METHOD AND APPARATUS FOR WIRELESS COMMUNICATION**

(30) Priority: 07.07.2022 CN 202210802789
(71) Applicant: SHANGHAI LANGBO COMMUNICATION TECHNOLOGY COMPANY LIMITED, Shanghai 200240 (CN)
(72) Inventor: ZHANG, Xiaobo, Shanghai 201206 (CN)
(74) Representative: Gunzelmann, Rainer
(86) International application number: PCT/CN2023/105672
(87) International publication number: WO 2024/008064

(57) **Abstract**

The present disclosure provides a method and an apparatus for wireless communication. The method includes: receiving a first message, where the first message is used to indicate a first CSI-IM resource set, and the first CSI-IM resource set includes a first CSI-IM resource; performing an interference measurement in the first CSI-IM resource; and sending a first CSI, where the interference measurement performed in the first CSI-IM resource is used to calculate the first CSI; and a frequency domain resource occupied by the first CSI-IM resource includes at least two RB sets, and any two RB sets in the at least two RB sets are nonconsecutive in a frequency domain. This application can improve configuration flexibility, and maintain great compatibility with existing systems.

## Description

### FIELD OF TECHNOLOGY

The present disclosure relates to a method and an apparatus for a wireless communication system, and in particular, to a solution and apparatus for a channel state information - interference measurement (Channel State Information - Interference Measurement, CSI-IM) resource in a wireless communication system.

### BACKGROUND

In conventional wireless communication, a base station selects, for user equipment (User Equipment, UE) based on channel status information (channel status information, CSI) reported by the UE, appropriate transmission parameters such as a modulation and coding scheme (Modulation and Coding Scheme, MCS), a transmitted precoding matrix indicator (Transmitted Precoding Matrix Indicator, TPMI), a transmission configuration indication (Transmission Configuration Indication, TCI), and the like. Typical CSIs include at least one of parameters such as a CSI-RS resource indicator (CSI-RS Resource Indicator, CRI), a rank indicator (Rank Indicator, RI), a precoding matrix indicator (Precoding Matrix Indicator, PMI), a channel quality indicator (Channel quality indicator, CQI), a layer 1 reference signal received power (Layer 1 reference signal received power, L1-RSRP ), or a Layer 1 signal-to-noise and interference ratio (Layer 1 signal-to-noise and interference ratio, L1-SINR).

In order to calculate the CSI, a CSI-RS (Reference Signal) resource and a CSI-IM resource are configured for the UE, where the CSI-RS resource is used for a channel measurement or an interference measurement, and the CSI-IM resource is used for an interference measurement. For the CSI-IM resource, the configured RB (Resource Block) is consecutive in a frequency domain.

### SUMMARY

Subband full duplex (SBFD, Subband Full Duplex) has been proposed in a new radio (New Radio, NR) system. That is, a communication device simultaneously performs transmit and receive operations on two subbands. The inventors have found through their research that in application scenarios such as SBFD, the existing solution for CSI-IM resources may no longer be applicable.

This application discloses a solution to resolve the above problems. It should be noted that although the original intention of this application is to provide the description for SBFD scenarios, this application may also be used in non-SBFD scenarios. Further, in a unified design solution for CSI-IM resources, the complexity of hardware for an interference measurement or the signaling overhead can be reduced. In the case of no conflict, embodiments and features in the embodiments in any node of this application can be applied to any other nodes. In the case of no conflict, the embodiments in this application and features in the embodiments may be freely combined with each other.

If necessary, reference may be made to standards such as 3GPP standards TS38.214, TS38.331, and TS38.211, to better understand the technical features in this application.

This application discloses a method used in a first node for wireless communication. The method includes:
receiving a first message, where the first message is used to indicate a first CSI-IM resource set (resource set), and the first CSI-IM resource set includes a first CSI-IM resource; and performing an interference measurement (interference measurement) in the first CSI-IM resource;
sending a first CSI;
where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, in the method, signaling overhead used to configure a CSI-IM resource can be reduced, and transmission efficiency can be improved.

In an embodiment, in the method, the configuration flexibility of a CSI-IM resource in the frequency domain can be improved.

Specifically, according to an aspect of this application, in the method, each of the at least two RB sets is indicated by a CSI-FrequencyOccupation.

In an embodiment, in the method, the compatibility with existing systems is maximized, and in particular, the complexity of the hardware in the first node for the interference measurement is reduced.

Specifically, according to an aspect of this application, in the method, the first CSI-IM resource set includes a second CSI-IM resource, the second CSI-IM resource occupies only one RB set, and the one RB set includes a plurality of consecutive RBs.

In the method, one CSI-IM resource set includes two types of CSI-IM resources, namely, a CSI-IM resource occupying consecutive RBs and a CSI-IM resource occupying nonconsecutive RBs. Therefore, the configuration flexibility is great.

In an embodiment, the one RB set is indicated by a CSI-FrequencyOccupation.

Specifically, according to an aspect of this application, the method includes:
the first transmitter, sending a second message;
where the second message is used to determine a configuration of the first CSI-IM resource, and the second message is used to indicate a capability of a first node.

The method facilitates the first node to notify, based on the capability of the first node, whether a network device or a peer-to-peer communication device supports a configuration of nonconsecutive RBs.

In an embodiment, a receiver of the second message determines, based on the second message, that the first node supports occupying CSI-IM resources of the nonconsecutive RBs.

In an embodiment, the second message belongs to a *UE-NR-Capability* IE (Information Element, IE).

In an embodiment, the second message belongs to a FeatureSetDownlink IE.

Specifically, according to an aspect of this application, the method includes:
receiving a third message;
where the third message is used to indicate a first reporting configuration, the first reporting configuration is applied to the first CSI; and the first reporting configuration indicates that a CSI for a first frequency domain resource is reported, and the first frequency domain resource includes at least one RB that does not belong to the frequency domain resource occupied by the first CSI-IM resource.

In a conventional solution, a CSI-IM resource that is associated with the first reporting configuration occupies each RB of the first frequency domain resource. However, in the method, the CSI-IM resource can be flexibly configured to adapt to, for example, the SBFD scenario.

Specifically, according to an aspect of this application, in the method, the third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are a plurality of consecutive RBs.

In an embodiment, the first CSI-RS resource occupies each RB of the first frequency domain resource.

This application discloses a method used in a second node for wireless communication. The method includes:
sending a first message, where the first message is used to indicate a first CSI-IM resource set, and the first CSI-IM resource set includes a first CSI-IM resource;
receiving a first CSI;
where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

Specifically, according to an aspect of this application, the method includes:
receiving a second message;
where the second message is used to determine a configuration of the first CSI-IM resource, and the second message is used to indicate a capability of a first node.

In an embodiment, a second transmitter maintains zero sending power in the first CSI-IM resource.

Specifically, according to an aspect of this application, the method includes:
sending a third message;
where the third message is used to indicate a first reporting configuration, the first reporting configuration is applied to the first CSI; and the first reporting configuration indicates that a CSI for a first frequency domain resource is reported, and the first frequency domain resource includes at least one RB that does not belong to the frequency domain resource occupied by the first CSI-IM resource.

This application discloses a first node for wireless communication. The first node includes:
a first receiver, receiving a first message, where the first message is used to indicate a first CSI-IM resource set, and the first CSI-IM resource set includes a first CSI-IM resource; and performing an interference measurement in the first CSI-IM resource;
a first transmitter, sending a first CSI;
where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

This application discloses a second node for wireless communication. The second node includes:
a second transmitter, sending a first message, where the first message is used to indicate a first CSI-IM resource set, and the first CSI-IM resource set includes a first CSI-IM resource;
a second receiver, receiving a first CSI;
where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

### BRIEF DESCRIPTION OF THE DRAWINGS

Other features, objectives, and advantages of the present disclosure will become more apparent by reading the detailed description of non-limiting embodiments with reference to the following accompanying drawings:
FIG. 1 is a flowchart for transmitting a first CSI according to an embodiment of the present disclosure;
FIG. 2 is a schematic diagram of a network architecture according to an embodiment of the present disclosure;
FIG. 3 is a schematic diagram of an embodiment of a radio protocol architecture of a user plane and a control plane according to an embodiment of the present disclosure;
FIG. 4 is a schematic diagram of a hardware module of a communication node according to an embodiment of the present disclosure;
FIG. 5 is a flowchart of transmission between a first node and a second node according to an embodiment of the present disclosure;
FIG. 6 is a schematic diagram of a first frequency domain resource according to an embodiment of the present disclosure;
FIG. 7 is a schematic diagram of an RB set according to an embodiment of the present disclosure;
FIG. 8 is a block diagram of a structure of a processing device used in a first node according to an embodiment of the present disclosure;
FIG. 9 is a block diagram of a structure of a processing device used in a second node according to an embodiment of the present disclosure.

### DESCRIPTION OF THE EMBODIMENTS

The following describes technical solutions in this application in detail with reference to the accompanying drawings. It should be noted that, in the case of no conflict, the embodiments of this application and features in the embodiments may be combined with each other.

### Embodiment 1

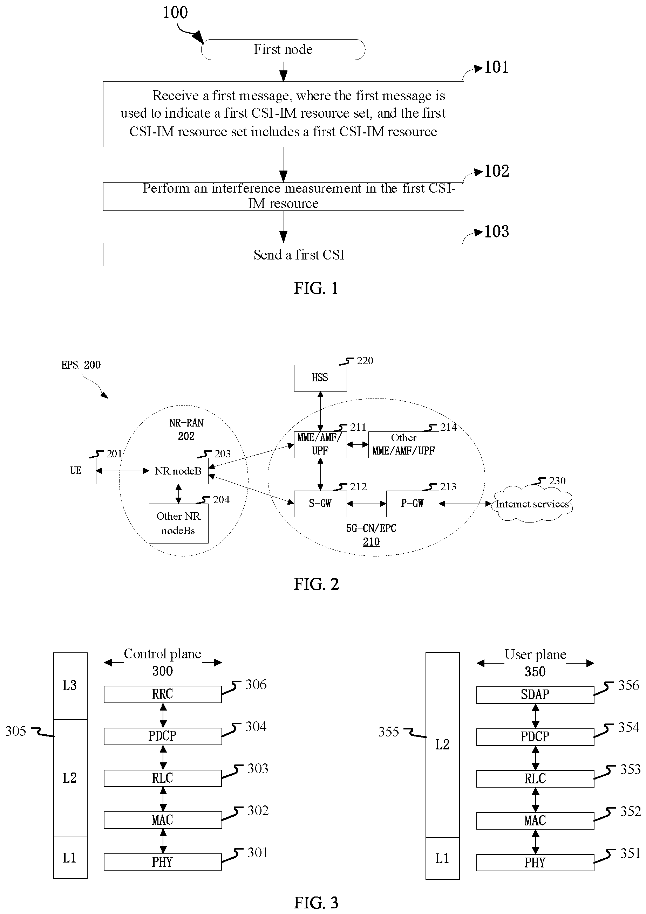

Embodiment 1 shows a flowchart of transmitting a first CSI according to an embodiment of this application, as shown in FIG. 1.

A first node 100 receives a first message in step 101, where the first message is used to indicate a first CSI-IM resource set, and the first CSI-IM resource set includes a first CSI-IM resource; performs an interference measurement in the first CSI-IM resource in step 102; and sends a first CSI in step 102.

In the embodiment 1, the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the first message is higher layer signaling (higher layer signaling).

In an embodiment, the first message is radio resource control (Radio Resource Control, RRC) layer signaling.

In an embodiment, the first message includes at least one RRC layer IE (Information Element, IE).

In an embodiment, the first message includes a *CSI-IM-ResourceSet* IE.

In a sub-embodiment of the foregoing embodiment, the first message includes CSI-MeasConfig.

In an embodiment, the first CSI-IM resource set (CSI-IM resource set) includes only a first CSI-IM resource (CSI-IM resource).

In an embodiment, the RB in this application includes 12 consecutive subcarriers (subcarrier) in the frequency domain. Sometimes, the RB in this application is also referred to as a physical resource block (Physical Resource Block, PRB).

In an embodiment, a quantity of RBs in any one of the at least two RB sets is a positive integer multiple of 4.

In an embodiment, an index of a starting RB (starting RB) occupied in any one of the at least two RB sets is 0 or a positive integer multiple of 4.

In an embodiment, the index of the starting RB is on a common RB grid (on a common resource block grid) in relation to a common RB #0 (in relation to CRB#0).

In the foregoing two embodiments, the first CSI-IM resource has great compatibility, and the complexity of hardware in the first node is reduced.

In an embodiment, the first CSI includes a CRI.

In an embodiment, the first CSI includes a CQI.

In a sub-embodiment of the foregoing embodiment, the first CSI includes an RI and a PMI.

In an embodiment, the first CSI includes an L1-SINR.

In an embodiment, each of the at least two RB sets is indicated by a CSI-FrequencyOccupation.

In a sub-embodiment of the foregoing embodiment, the first CSI-IM resource is configured by a *CSI-IM-Resource* IE, the one *CSI-IM-Resource* IE includes a plurality of CSI-FrequencyOccupations, and the plurality of CSI-FrequencyOccupations are in a one-to-one correspondence with the RB sets in the at least two RB sets.

The method has advantages that existing signaling structures are reused as much as possible, and the great compatibility is maintained.

In an embodiment, there is no RB that belongs to the two RB sets in the at least two RB sets.

In an embodiment, a quantity of RBs included in a frequency domain interval between any two RB sets in the at least two RB sets is a positive integer multiple of 4.

In an embodiment, the first CSI-IM resource set includes a second CSI-IM resource, the second CSI-IM resource occupies only one RB set, and the one RB set includes a plurality of consecutive RBs.

In an embodiment, the one RB set is indicated by a CSI-FrequencyOccupation.

Generally, how to calculate the CSI is determined by a hardware device vendor. The following uses a CQI as an example to describe a nonrestrictive implementation:

A first node N1 first performs a channel measurement in a CSI-RS resource, to obtain a channel parameter matrix H_{r×*t*}, where *r*,*t* respectively represent a quantity of receiving antennas and a quantity of antenna ports for sending. When a precoding matrix W_{t×*l*} is used, an encoded channel parameter matrix is H_{r×*t*} · W_{t×*l*}, where *l* represents a rank (rank) or a quantity of layers. An equivalent channel capacity of H_{r×*t*} · W_{t×*l*} is calculated according to a criterion, for example, a SINR, an exponential effective SINR mapping (Exponential Effective SINR Mapping, EESM), or a received block mean mutual information ratio (Received Block mean mutual Information Ratio, RBIR), and then the first CQI is determined based on the equivalent channel capacity in a table lookup manner. Generally, for the calculation of an equivalent channel capacity, the first node N1 needs to estimate noise and interference, and the interference measurement performed on the first CSI-IM resource is used to estimate at least the former of interference and noise. Generally, the direct mapping of the equivalent channel capacity to the value of the CQI depends on hardware-related factors such as the performance of the receiver, a modulation method, or the like. Generally, the precoding matrix W_{t×*l*} is fed by the first node via the RI or the PMI.

Compared to the CQI, the L1-SINR does not carry information about the receiver. Therefore, the calculation of the equivalent channel capacity is omitted.

### Embodiment 2

The embodiment 2 shows a schematic diagram of a network architecture according to an embodiment of this application, as shown in FIG. 2. FIG. 2 illustrates 5G new radio (New Radio, NR), long-term evolution (Long-Term Evolution, LTE), and long-term evolution advanced (Long-Term Evolution Advanced, LTE-A) system architectures. A 5G NR or LTE network architecture 200 may be referred to as a 5G system (5GS)/evolved packet system (Evolved Packet System, EPS) or some other appropriate terms. An EPS 200 may include user equipment (User Equipment, UE) 201, a next generation radio access network (next generation radio access network, NG-RAN) 202, an evolved packet core (Evolved Packet Core, EPC)/5G-core network (5G-Core Network, 5G-CN) 210, a home subscriber server (Home Subscriber Server, HSS) 220, and an internet service 230. The EPS may be interconnected to other access networks, but entities/interfaces are not shown for simplicity. As shown in the figure, the EPS provides packet-switched services. However, those skilled in the art will easily understand that the various concepts in this application can be extended to networks providing circuit-switched services or other cellular networks. The NG-RAN includes an NR nodeB (gNB) 203 and other gNBs 204. The gNB 203 provides a user and control plane protocol termination toward the UE 201. The gNB 203 may be connected to other gNBs 204 via an Xn interface (for example, backhaul). The gNB 203 may also be referred to as a base station, a base transceiver station, a radio base station, a radio transceiver, a transceiver function, a basic service set (BSS), an extended service set (ESS), a TRP, or some other appropriate terms. The gNB 203 provides the UE 201 with an access point to the EPC/5G-CN 210. Examples of the UE 201 include a cellular phone, a smart phone, a session initiation protocol (SIP) phone, a laptop computer, a personal digital assistant (PDA), satellite radio, non-terrestrial base station communication, satellite-based mobile communication, a global positioning system, a multimedia device, a video device, a digital audio player (for example, an MP3 player), a camera, a game console, an unmanned aerial vehicle, an aircraft, a narrow band-internet of things device, a machine-type communication device, a land vehicle, an automobile, a wearable device, or any other device having similar functions. A person skilled in the art may also refer to UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld device, a user agent, a mobile client, a client, or some other appropriate terms. The gNB 203 is connected to the EPC/5G-CN 210 via an S1/NG interface. The EPC/5G-CN 210 includes a mobility management entity (Mobility Management Entity, MME)/authentication management field (Authentication Management Field, AMF)/user plane function (User Plane Function, UPF) 211, other MME/AMF/UPF 214, a service gateway (Service Gateway, S-GW) 212, and a packet date network gateway (Packet Date Network Gateway, P-GW) 213. The MME/AMF/UPF 211 is a control node that processes signaling between the UE 201 and the EPC/5G-CN 210. Generally, the MME/AMF/UPF 211 provides bearer and connection management. All user internet protocol (Internet Protocol, IP) packets are transmitted via the S-GW 212, and the S-GW 212 is connected to the P-GW 213. The P-GW 213 provides functions such as a UE IP address allocation function. The P-GW 213 is connected to an internet service 230. The internet service 230 includes an internet protocol service corresponding to an operator, specifically, includes an internet, an intranet, an IP multimedia subsystem (IP Multimedia Subsystem, IMS), and a packet-switched streaming service.

In an embodiment, the UE 201 corresponds to the first node in this application, and the gNB 203 corresponds to the second node in this application.

In an embodiment, the UE 201 supports generating a CSI via artificial intelligence (Artificial Intelligence, AI) or deep learning.

Typically, the generating a CSI includes compressing the CSI.

In an embodiment, the UE 201 is a terminal supporting Massive-MIMO.

In an embodiment, the gNB 203 supports transmission based on Massive-MIMO.

In an embodiment, the gNB 203 supports decompressing the CSI via AI or deep learning.

In an embodiment, the gNB 203 is a macro cellular (MarcoCellular) base station.

In an embodiment, the gNB 203 is a micro cell (Micro Cell) base station.

In an embodiment, the gNB 203 is a pico cell(PicoCell) base station.

In an embodiment, the gNB 203 is a home base station (Femtocell).

In an embodiment, the gNB 203 is a base station device supporting a large delay difference.

In an embodiment, the gNB 203 is a flight platform device.

In an embodiment, the gNB 203 is a satellite device.

In an embodiment, the first node and the second node in this application are the UE 201 and the gNB 203 respectively.

### Embodiment 3

The embodiment 3 shows a schematic diagram of an embodiment of a radio protocol architecture of a user plane and a control plane according to this application, as shown in FIG. 3. FIG. 3 is a schematic diagram illustrating an embodiment of a radio protocol architecture of a user plane 350 and a control plane 300. FIG. 3 illustrates a radio protocol architecture for a first node device (an RSU in a UE or a V2X, an on-board device or an on-board communication module) and a second node device (a gNB, an RSU in a UE or a V2X, an on-board device, or an on-board communication module), or for a control plane 300 between two UEs by using three layers, namely, a layer 1, a layer 2, and a layer 3. The layer 1 (L1 layer) is the lowest layer and implements signal processing functions of a physical layer (physical layer, PHY). The L1 is referred to as a PHY 301 in this specification. The layer 2 (L2 layer) 305 is above the PHY 301 and responsible for a link between the first node device and the second node device and a link between the two UEs via the PHY 301. The L2 layer 305 includes a medium access control (Medium Access Control, MAC) sublayer 302, a radio link control (Radio Link Control, RLC) sublayer 303, and a packet data convergence protocol (Packet Data Convergence Protocol, PDCP) sublayer 304 which terminate at the second node device. The PDCP sublayer 304 provides data encryption and integrity protection. The PDCP sublayer 304 further provides support over-the-horizon movement of the first node device to the second node device. The RLC sublayer 303 provides packet segmentation and reassembly, and implements retransmission of lost packets via ARQ. The RLC sublayer 303 further provides duplicate packet detection and protocol error detection. The MAC sublayer 302 provides a mapping between a logical channel and a transmission channel and multiplexing of logical channels. The MAC sublayer 302 is further responsible for allocating various radio resources (for example, resource blocks) in a cell for the first node device. The MAC sublayer 302 is further responsible for performing HARQ operations. A radio resource control (Radio Resource Control, RRC) sublayer 306 in the layer 3 (L3) of the control plane 300 is responsible for obtaining a radio resource (for example, a radio bearer) and configuring the lower layer through RRC signaling between the second node device and the first node device. The radio protocol architecture of the user plane 350 includes a layer 1 (L1 layer) and a layer 2 (L2 layer). For a physical layer 351, a PDCP sublayer 354 in an L2 layer 355, an RLC sublayer 353 in the L2 layer 355, and a MAC sublayer 352 in the L2 layer 355, the radio protocol architecture used for the first node device and the second node device in the user plane 350 is basically the same as a corresponding plane and a sublayer in the control plane 300. In addition, the PDCP sublayer 354 further provides packet header compression for an upper layer packet, to reduce radio transmission overhead. The L2 layer 355 in the user plane 350 further includes a service data adaptation protocol (Service Data Adaptation Protocol, SDAP) sublayer 356. The SDAP sublayer 356 is responsible for a mapping between a QoS stream and a data radio bearer (DRB, Data Radio Bearer), to support service diversity. Although not shown in the figures, the first node device may have a plurality of upper layers above the L2 layer 355, including a network layer (for example, an IP layer) that terminates at a P-GW on a network side and an application layer that terminates at the other end of the connection (for example, a remote UE, a server, or the like).

In an embodiment, the wireless protocol architecture in FIG. 3 is applied to the first node in this application.

In an embodiment, the wireless protocol architecture in FIG. 3 is applied to the second node in this application.

In an embodiment, the first CSI in this application is generated at the PHY 301.

In an embodiment, the first message in this application is generated at the RRC sublayer 306.

In an embodiment, the second message in this application is generated at the RRC sublayer 306.

In an embodiment, the third message in this application is generated at the RRC sublayer 306.

### Embodiment 4

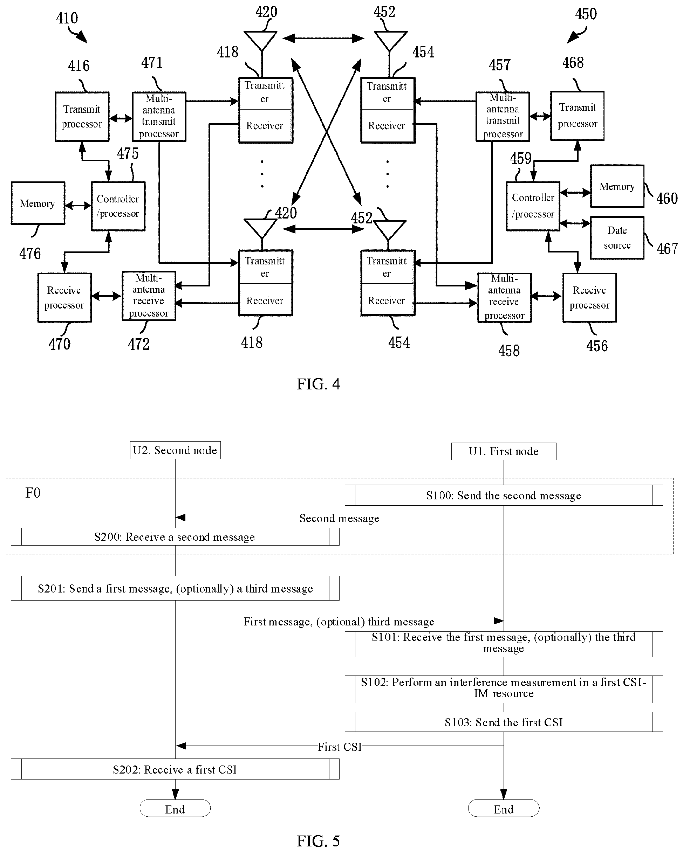

The embodiment 4 shows a schematic diagram of a hardware module of a communication node according to an embodiment of this application, as shown in FIG. 4. FIG. 4 is a block diagram of a first communication device 450 and a second communication device 410 that communicate with each other in an access network.

The first communication device 450 includes a controller/processor 459, a memory 460, a data source 467, a transmit processor 468, a receive processor 456, a multi-antenna transmit processor 457, a multi-antenna receive processor 458, a transmitter/receiver 454, and an antenna 452.

The second communication device 410 includes a controller/processor 475, a memory 476, a receive processor 470, a transmit processor 416, a multi-antenna receive processor 472, a multi-antenna transmit processor 471, a transmitter/receiver 418, and an antenna 420.

In transmission from the second communication device 410 to the first communication device 450, at the second communication device 410, an upper layer packet from a core network is provided to the controller/processor 475. The controller/processor 475 implements the functionality of an L2 layer. In transmission from the second communication device 410 to the first communication device 450, the controller/processor 475 provides header compression, encryption, packet segmentation, reordering, multiplexing between a logical channel and a transmission channel, and allocation of radio resources to the first communication device 450 based on various priority metrics. The controller/processor 475 is further responsible for retransmission of lost packets, and signaling to the first communication device 450. The transmit processor 416 and the multi-antenna transmit processor 471 implement various signal processing functions at an L1 layer (for example, a physical layer). The transmit processor 416 implements channel coding and interleaving, to facilitate the forward error correction (FEC) at the second communication device 410, and the mapping of signal clusters based on a variety of modulation solutions (for example, binary phase shift keying (BPSK), quadrature phase shift keying (QPSK), M-phase shift keying (M-PSK), and M-quadrature amplitude modulation (M-QAM)). The multi-antenna transmit processor 471 performs digital spatial precoding on coded and modulated symbols, including codebook-based precoding and non-codebook-based precoding, and performs beam assignment processing to generate one or more spatial streams. Then, the transmit processor 416 maps each spatial stream to a subcarrier, multiplexes a reference signal (for example, a guide frequency) with the spatial stream in a time domain and/or a frequency domain, and subsequently performs a fast Fourier inverse transform (IFFT) to generate a physical channel that carries a time-domain multi-carrier symbol stream. The multi-antenna transmit processor 471 performs an operation of transmitting analog precoding/beamforming on the time-domain multi-carrier symbol stream. Each transmitter 418 converts a baseband multi-carrier symbol stream provided by the multi-antenna transmit processor 471 into a radio frequency stream, and subsequently provides the radio frequency stream to a different antenna 420.

In transmission from the second communication device 410 to the first communication device 450, at the first communication device 450, each receiver 454 receives a signal via an antenna 452 corresponding to each receiver 454. Each receiver 454 recovers information modulated onto a radio frequency carrier, converts the radio frequency stream into a baseband multi-carrier symbol stream, and provides the baseband multi-carrier symbol stream to the receive processor 456. The receive processor 456 and the multi-antenna receive processor 458 implement various signal processing functions at the L1 layer. The multi-antenna receive processor 458 performs an operation of receiving analog precoding/beamforming on the baseband multi-carrier symbol stream from the receiver 454. The receive processor 456 performs a fast Fourier transform (FFT), to transfer, to a frequency domain from a time domain, the baseband multi-carrier symbol stream on which the operation of receiving analog precoding/beamforming is performed. In the frequency domain, a data signal of the physical layer and the reference signal are demultiplexed by the receive processor 456, where the reference signal is used for channel estimation, and the data signal is recovered through multi-antenna detection in the multi-antenna receive processor 458, restoring any spatial stream intended for the first communication device 450. A symbol on each spatial stream is demodulated and recovered in the receive processor 456 to generate a soft decision. Subsequently, the receive processor 456 performs deinterleaving and channel decoding on the soft decision, to recover, on a physical channel, upper layer data and a control signal that are sent by the second communication device 410. The, the upper layer data and the control signal are provided to the controller/processor 459. The controller/processor 459 implements functions of the L2 layer. The controller/processor 459 may be associated with the memory 460 that stores program code and data. The memory 460 may be referred to as a computer-readable medium. In transmission from the second communication device 410 to the second node 450, the controller/processor 459 provides multiplexing between a transmission channel and a logical channel, packet reassembly, decryption, header decompression, and control signal processing, to recover the upper layer packet from the core network. Subsequently, the upper layer packet is provided to all protocol layers above the L2 layer. Alternatively, various control signals may also be provided to L3 for processing at L3.

In transmission from the first communication device 450 to the second communication device 410, at the first communication device 450, the upper layer packet is provided to the controller/processor 459 via a data source 467. The data source 467 represents all protocol layers above the L2 layer. Similar to a transmitting function at the second communication device 410 described in the transmission from the second communication device 410 to the first communication device 450, the controller/processor 459 implements header compression, encryption, packet segmentation, reordering, and multiplexing between the logical channel and the transmission channel based on radio resource allocation, to implement functions of the L2 layer used for the user plane and the control plane. The controller/processor 459 is further responsible for retransmission of the lost packets, and signaling to the second communication device 410. The transmit processor 468 performs channel coding, interleaving, and modulation mapping. The multi-antenna transmit processor 457 performs digital multi-antenna spatial precoding, including codebook-based precoding and non-codebook-based precoding, and beamforming processing. Subsequently, the transmit processor 468 modulates the generated spatial stream into a multi-carrier/single-carrier symbol stream. The multi-carrier/single-carrier symbol stream is provided to a different antenna 452 via the transmitter 454 after the operation of analog precoding/beamforming is performed in the multi-antenna transmit processor 457. Each transmitter 454 first converts the baseband symbol stream provided by the multi-antenna transmit processor 457 into a radio frequency symbol stream, and then provides the radio frequency symbol stream to the antenna 452.

In transmission from the first communication device 450 to the second communication device 410, a function at the second communication device 410 is similar to the receive function at the first communication device 450 described in the transmission from the second communication device 410 to the first communication device 450. Each receiver 418 receives the radio frequency signal through an antenna 420 corresponding to each receiver 418, converts the received radio frequency signal to a baseband signal, and provides the baseband signal to the multi-antenna receive processor 472 and the receive processor 470. The receive processor 470 and the multi-antenna receive processor 472 both implement functions of the L1 layer. The controller/processor 475 implements functions of the L2 layer. The controller/processor 475 may be associated with the memory 476 that stores program code and data. The memory 476 may be referred to as a computer-readable medium. In transmission from the first communication device 450 to the second communication device 410, the controller/processor 475 provides multiplexing between a transmission channel and a logical channel, packet reassembly, decryption, header decompression, and control signal processing, to recover an upper layer packet from a UE 450. The upper layer packet from the controller/processor 475 may be provided to the core network.

In an embodiment, the first communication device 450 device includes: at least one processor and at least one memory, where the at least one memory includes computer program code; and the at least one memory and the computer program code are configured to be used with the at least one processor together. The first communication device 450 device is configured to at least: receive a first message, where the first message is used to indicate a first CSI-IM resource set, and the first CSI-IM resource set includes a first CSI-IM resource; perform an interference measurement in the first CSI-IM resource; and send the first CSI, where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the first communication device 450 includes: a memory storing a computer-readable instruction program, where the computer-readable instruction program generates an action when being executed by at least one processor. The action includes: receiving a first message, where the first message is used to indicate a first CSI-IM resource set, and the first CSI-IM resource set includes a first CSI-IM resource; performing an interference measurement in the first CSI-IM resource; and sending the first CSI, where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the second communication device 410 includes: at least one processor and at least one memory, where the at least one memory includes computer program code; and the at least one memory and the computer program code are configured to be used with the at least one processor together. The second communication device 410 is configured to at least: send a first message, where the first message is used to indicate a first CSI-IM resource set, and the first CSI-IM resource set includes a first CSI-IM resource; and receive a first CSI, where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the second communication device 410 includes: a memory storing a computer-readable instruction program, where the computer-readable instruction program generates an action when being executed by at least one processor. The action includes: sending a first message, where the first message is used to indicate a first CSI-IM resource set, and the first CSI-IM resource set includes a first CSI-IM resource; and receiving a first CSI, where the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the first communication device 450 corresponds to the first node in this application.

In an embodiment, the second communication device 410 corresponds to the second node in this application.

In an embodiment, the first communication device 450 is a UE, and the second communication device 410 is a base station.

In an embodiment, the antenna 452, the receiver 454, the multi-antenna receive processor 458, the receive processor 456, and the controller/processor 459 are used to receive the first message.

In an embodiment, the antenna 452, the receiver 454, the multi-antenna receive processor 458, the receive processor 456, and the controller/processor 459 are used to receive the third message.

In an embodiment, the antenna 452, the transmitter 454, the multi-antenna transmit processor 457, the transmit processor 468, and the controller/processor 459 are used to send the first CSI.

In an embodiment, the antenna 452, the transmitter 454, the multi-antenna transmit processor 457, the transmit processor 468, and the controller/processor 459 are used to send the second message.

In an embodiment, the antenna 420, the transmitter 418, the multi-antenna transmit processor 471, the transmit processor 416, and the controller/processor 475 are used to send the first message.

In an embodiment, the antenna 420, the transmitter 418, the multi-antenna transmit processor 471, the transmit processor 416, and the controller/processor 475 are used to send the third message.

In an embodiment, the antenna 420, the receiver 418, the multi-antenna receive processor 472, the receive processor 470, and the controller/processor 475 are used to receive the first CSI.

In an embodiment, the antenna 420, the receiver 418, the multi-antenna receive processor 472, the receive processor 470, and the controller/processor 475 are used to receive the second message.

### Embodiment 5

The embodiment 5 shows a flowchart of transmission between a first node and a second node according to an embodiment of this application, as shown in FIG. 5. In FIG. 5, steps in a box F0 are optional.

A first node U1 sends a second message in step S100; receives a first message in step S101, where the first message is used to indicate a first CSI-IM resource set, and the first CSI-IM resource set includes a first CSI-IM resource; performs an interference measurement in the first CSI-IM resource in step S102; and sends a first CSI in step S103.

A second node U2 receives the second message in step S200; sends the first message in step S201; and receives the first CSI in step S202.

In the embodiment 5, the interference measurement performed in the first CSI-IM resource is used to calculate the first CSI; a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain; and the second message is used to determine a configuration of the first CSI-IM resource, and the second message is used to indicate a capability of a first node.

In an embodiment, the frequency domain resource occupied by the first CSI-IM resource belongs to a first bandwidth part (BandWidth Part, BWP).

In an embodiment, the second message is RRC layer signaling.

In an embodiment, the second message belongs to a UE-CapabilityRAT-Container.

In an embodiment, the second message belongs to a UE-NR-Capability IE.

In an embodiment, the second message belongs to a FeatureSetDownlink IE.

The foregoing embodiment has advantages that flexibility is improved or hardware complexity is reduced due to a support capability of independent configurations of each frequency band to nonconsecutive CSI-IM resources.

In an embodiment, the second message indicates that the first node U1 supports occupying one CSI-IM resource of the nonconsecutive RBs.

In an embodiment, the second message indicates that the first node U1 supports occupying one CSI-IM resource of the nonconsecutive RBs and occupying one CSI-RS resource (CSI-RS resource) of the nonconsecutive RBs.

In an embodiment, the second message indicates that the first node U1 supports that frequency domain resources spanned by at least two CSI-RS resources in one CSI-RS resource set (CSI-RS resource set) are different.

An indication of the second message may be explicit or implicit.

In an embodiment, the second node U2 sends a third message in step S201, and the first node U1 receives the third message in step S101, where the third message is used to indicate a first reporting configuration, the first reporting configuration is applied to the first CSI; and the first reporting configuration indicates that a CSI for a first frequency domain resource is reported, and the first frequency domain resource includes at least one RB that does not belong to the frequency domain resource occupied by the first CSI-IM resource.

In an embodiment, the third message is higher layer signaling.

In an embodiment, the third message is RRC layer signaling.

In an embodiment, the third message includes at least one RRC IE.

In an embodiment, the third message includes a *CSI-ReportConfig* IE.

In an embodiment, the first frequency domain resource is indicated by a *csi-ReportingBand* in the third message.

In an embodiment, the first frequency domain resource includes at least one subband (subband).

In an embodiment, the first frequency domain resource includes at least one subband in the first BWP.

In an embodiment, in the subband, quantities of RBs included in other subbands except for a subband located at an edge of the first BWP are the same.

In an embodiment, quantities of RBs included in other subbands except for a subband located at an edge of the first BWP are increased while a bandwidth of the first BWP is increased.

In an embodiment, the quantity of subbands included in the first BWP does not exceed 18.

It should be noted that, unless otherwise specified, a subband configured by the third message is independent of a "subband" in an SBFD, and the "subband" in the SBFD is a relatively broad concept and is under discussion.

In an embodiment, the third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are a plurality of consecutive RBs.

In an embodiment, the first CSI-RS resource set (CSI-RS resource set) includes only a first CSI-RS resource (CSI-RS resource).

In an embodiment, density (density) of the first CSI-RS resource is not less than 1, and a frequency domain resource spanned (across) by the first CSI-RS resource is a resource block (Resource Block, RB) occupied by the first CSI-RS resource.

In an embodiment, the density (density) of the first CSI-RS resource is 0.5, and the first CSI-RS resource occupies all odd (Odd) RBs or even (Even) RBs in the frequency domain resource spanned (across) by the first CSI-RS resource.

Sometimes, the RB in this application is also referred to as a physical resource block (Physical Resource Block, PRB).

In an embodiment, the RB in this application includes 12 consecutive subcarriers (subcarriers) in the frequency domain.

In an embodiment, density of one CSI-RS resource is a quantity of resource elements (Resource Elements, REs) occupied by each port of each PRB of one CSI-RS resource.

In an embodiment, the density of the one CSI-RS resource is indicated by a *CSI-RS-ResourceMapping* configuring the one CSI-RS resource.

In an embodiment, the density of the one CSI-RS resource is indicated by a *density* field in the *CSI-RS-ResourceMapping* configuring the one CSI-RS resource.

In an embodiment, a quantity of RBs included in one RB set is a positive integer multiple of 4.

In an embodiment, the first message and the third message are transmitted on a physical downlink shared channel (Physical Downlink Shared Channel, PDSCH) and the second message is transmitted on a physical uplink shared channel (Physical Uplink Shared Channel, PUSCH).

In an embodiment, the first node U1 and the second node U2 are a UE and a base station respectively.

### Embodiment 6

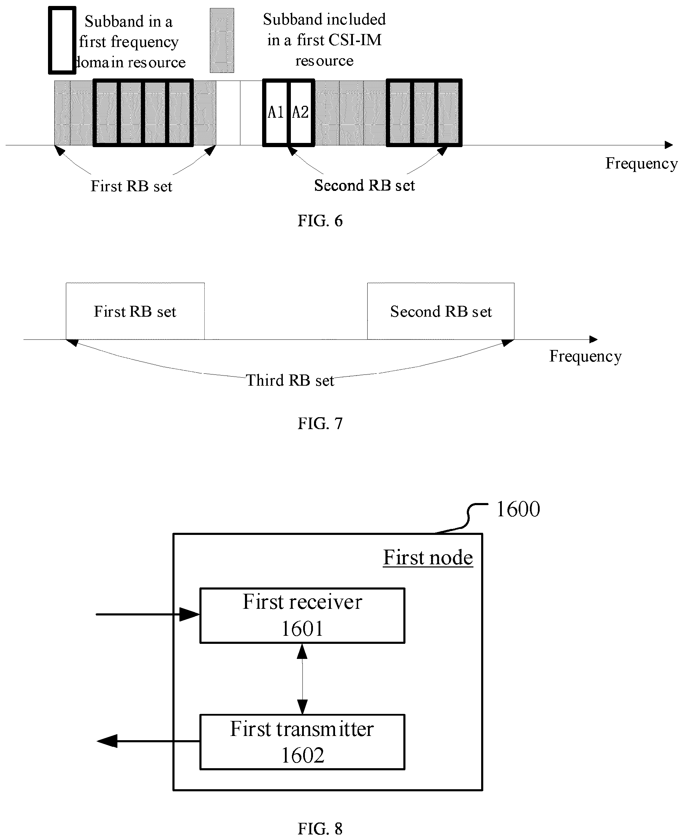

The embodiment 6 shows a schematic diagram of a first frequency domain resource according to an embodiment of this application, as shown in FIG. 6. A small grid in FIG. 6 represents a subband, a small grid identified by a thick-line frame represents a subband of a first frequency domain resource, and a small grid filled with gray represents a subband included in a first CSI-IM resource.

In the embodiment 6, a frequency domain resource occupied by the first CSI-IM resource includes a first RB set and a second RB set, and the first RB set and the second RB set belong to a first BWP.

In an embodiment, a quantity of PRBs included in all subbands in the first BWP except for a subband located at the outermost of the first BWP is P1, and P1 is a positive integer multiple of 4.

In an embodiment, P1 is indicated through higher level signaling.

In an embodiment, P1 is related to the quantity of PRBs included in the first BWP.

In an embodiment, each bit in a csi-ReportingBand in a third message indicates whether a subband in the first BWP feeds back a CSI.

In an embodiment, the first CSI targets one subband in the first BWP.

In an embodiment, the first CSI is wideband. That is, the first CSI applies to all subbands in the first frequency domain resource.

In an embodiment, that the first CSI targets one frequency domain resource (or subband) includes: The first CSI reflects channel quality on the one frequency domain resource (or subband).

In an embodiment, that the first CSI targets one frequency domain resource (or subband) includes: A channel measurement and an interference measurement in the one frequency domain resource (or subband) are used to calculate the first CSI.

In an embodiment, that the first CSI targets one frequency domain resource (or subband) includes: Assuming that a PDSCH is transmitted on the one frequency domain resource (or subband), the first CSI indicates a PDSCH to obtain a modulation coding method required at a specific blocking error rate (Blocking Error Rate, BLER).

In an embodiment, the specific BLER is not greater than 0.1.

In an embodiment, the specific BLER is 0.1.

In an embodiment, for a subband that is in the first frequency domain resource and outside the first CSI-IM resource, the first node utilizes other resources to perform an interference measurement.

In an embodiment, the other resources include a CSI-IM resource except for the first CSI-IM resource.

In an embodiment, the other resources include a non-zero power CSI-RS resource (*NZP-CSI-RS-Resource*)*.*

In an embodiment, the other resources are self-determined by the first node (that is, not configured by a network device).

In an embodiment, the subband that is in the first frequency domain resource and outside the first CSI-IM resource includes subbands identified by A1 and A2 in FIG. 6.

In an embodiment, the third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are a plurality of consecutive RBs.

In an embodiment, the channel measurement in the first CSI-RS resource is used to calculate the first CSI; and the first CSI-RS resource is associated with the first CSI-IM resource and other resources.

### Embodiment 7

The embodiment 7 shows a schematic diagram of an RB set according to an embodiment of the present disclosure, as shown in FIG. 7. In FIG. 7, a first RB set, a second RB set, and a third RB set belong to a first BWP.

In the embodiment 7, a frequency domain resource occupied by a first CSI-IM resource includes a first RB set and a second RB set in the first BWP, but does not include an RB between the first RB set and the second RB set.

In an embodiment, a third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are the third RB set.

In an embodiment, a channel measurement in the first CSI-RS resource is used to calculate the first CSI; and the first CSI-RS resource is associated with the first CSI-IM resource and other resources.

In an embodiment, for the RB or a subband between the first RB set and the second RB set, the calculation of a CSI fed back by the first node depends on a channel measurement performed in the first CSI-RS resource and an interference measurement performed in other resources. Frequency domain resources occupied by other resources include or span each RB between the first RB set and the second RB set.

In an embodiment, the other resources include a CSI-IM resource except for the first CSI-IM resource.

In an embodiment, the other resources include a non-zero power CSI-RS resource (*NZP-CSI-RS-Resource*)*.*

In an embodiment, the other resources are self-determined by the first node (that is, not configured by a network device).

### Embodiment 8

The embodiment 8 shows a block diagram of a structure of a processing device used in a first node according to an embodiment of this application, as shown in FIG. 8. In FIG. 8, a processing device 1600 in a first node includes a first receiver 1601 and a first transmitter 1602.

The first receiver 1601 receives a first message, where the first message is used to indicate a first CSI-IM resource set, and the first CSI-IM resource set includes a first CSI-IM resource; and performs an interference measurement in the first CSI-IM resource.

The first transmitter 1602 sends a first CSI.

In the embodiment 8, the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, each of the at least two RB sets is indicated by a CSI-FrequencyOccupation.

In an embodiment, the first CSI-IM resource set includes a second CSI-IM resource, the second CSI-IM resource occupies only one RB set, and the one RB set includes a plurality of consecutive RBs.

In an embodiment, the first transmitter 1602 sends a second message, where the second message is used to determine a configuration of the first CSI-IM resource, and the second message is used to indicate a capability of a first node.

In an embodiment, the first receiver 1601 receives a third message, where the third message is used to indicate a first reporting configuration, the first reporting configuration is applied to the first CSI; and the first reporting configuration indicates that a CSI for a first frequency domain resource is reported, and the first frequency domain resource includes at least one RB that does not belong to the frequency domain resource occupied by the first CSI-IM resource.

In an embodiment, the third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are a plurality of consecutive RBs.

The first transmitter 1602 sends a reference signal in the first CSI-RS resource, and the measurement in the first CSI-RS resource is a channel measurement.

The first transmitter 1602 sends a reference signal in the first CSI-RS resource, the measurement in the first CSI-RS resource is an interference measurement, and a frequency domain resource spanned by the first CSI-RS resource includes all RBs between any two RB sets in the at least two RB sets.

In an embodiment, the first node 1600 is a user device.

In an embodiment, the first transmitter 1602 includes at least one of the antenna 452, the transmitter/receiver 454, the multi-antenna transmit processor 457, the transmit processor 468, the controller/processor 459, the memory 460, and the data source 467 in FIG. 4 of this application.

In an embodiment, the first transmitter 1602 includes the antenna 452, the transmitter/receiver 454, the multi-antenna transmit processor 457, the transmit processor 468, the controller/processor 459, the memory 460, and the data source 467 in FIG. 4 of this application.

In an embodiment, the first receiver 1601 includes at least the first five of the antenna 452, the receiver 454, the multi-antenna receive processor 458, the receive processor 456, the controller/processor 459, the memory 460, and the data source 467 in FIG. 4 of this application.

In an embodiment, the first receiver 1601 includes at least the first four of the antenna 452, the receiver 454, the multi-antenna receive processor 458, the receive processor 456, the controller/processor 459, the memory 460, and the data source 467 in FIG. 4 of this application.

In an embodiment, the first receiver 1601 includes at least the first three of the antenna 452, the receiver 454, the multi-antenna receive processor 458, the receive processor 456, the controller/processor 459, the memory 460, and the data source 467 in FIG. 4 of this application.

### Embodiment 9

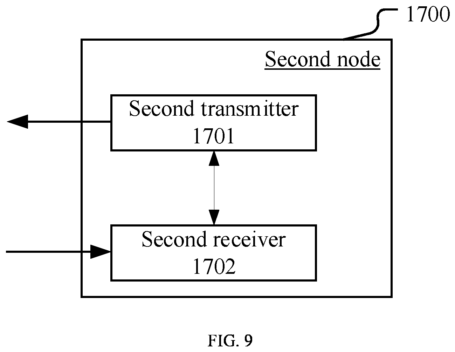

The embodiment 9 shows a block diagram of a structure of a processing device used in a second node according to an embodiment of this application, as shown in FIG. 9. In FIG. 9, a processing device 1700 in a second node includes a second transmitter 1701 and a second receiver 1702.

The second transmitter 1701 sends a first message, the first message is used to indicate a first CSI-IM resource set, and the first CSI-IM resource set includes a first CSI-IM resource. The second receiver 1702 receives a first CSI.

In the embodiment 9, the interference measurement performed in the first CSI-IM resource is used to calculate the first CSI; and a frequency domain resource occupied by the first CSI-IM resource includes at least two RB sets, each of the at least two RB sets includes a plurality of consecutive RBs in a frequency domain, and any two RB sets in the at least two RB sets are nonconsecutive in the frequency domain.

In an embodiment, the second receiver 1702 receives a second message, where the second message is used to determine a configuration of the first CSI-IM resource, and the second message is used to indicate a capability of a first node.

In an embodiment, the second transmitter 1701 sends a third message, where the third message is used to indicate a first reporting configuration, the first reporting configuration is applied to the first CSI; and the first reporting configuration indicates that a CSI for a first frequency domain resource is reported, and the first frequency domain resource includes at least one RB that does not belong to the frequency domain resource occupied by the first CSI-IM resource.

In an embodiment, the third message is used to indicate a first CSI-RS resource set, the first CSI-RS resource set includes a first CSI-RS resource, and a measurement in the first CSI-RS resource is used to calculate the first CSI; and frequency domain resources spanned by the first CSI-RS resource are a plurality of consecutive RBs.

In an embodiment, each of the at least two RB sets is indicated by a CSI-FrequencyOccupation.

In an embodiment, the first CSI-IM resource set includes a second CSI-IM resource, the second CSI-IM resource occupies only one RB set, and the one RB set includes a plurality of consecutive RBs.

In an embodiment, the second node 1700 is a base station device.

In an embodiment, the second transmitter 1701 includes the antenna 420, the transmitter 418, the transmit processor 416, and the controller/processor 475.

In an embodiment, the second transmitter 1701 includes the antenna 420, the transmitter 418, the multi-antenna transmit processor 471, the transmit processor 416, and the controller/processor 475.

In an embodiment, the second transmitter 1701 includes the antenna 420, the transmitter 418, the transmit processor 416, and the controller/processor 475.

In an embodiment, the second transmitter 1701 includes the antenna 420, the transmitter 418, the multi-antenna transmit processor 471, the transmit processor 416, and the controller/processor 475.

In an embodiment, the second receiver 1702 includes the antenna 420, the receiver 418, the multi-antenna receive processor 472, the receive processor 470, and the controller/processor 475.

In an embodiment, the second receiver 1702 includes the controller/processor 475.

A person of ordinary skill in the art may understand that all or some of the steps in the method may be implemented by instructing related hardware by using a program. The program may be stored in a computer-readable storage medium, for example, a read-only memory, a hard disk, an optical disc, or the like. Optionally, all or some of the steps of the foregoing embodiments may also be implemented using one or more integrated circuits. Correspondingly, the modular units in the foregoing embodiments may be implemented in a form of hardware, or may be implemented in a form of a software function module. Any particular forms of combinations of software and hardware are not limited in this application. The user devices, terminals, and UEs each in this application include, but are not limited to a drone, a communication module on a drone, a remote control aircraft, a flight, a small aircraft, a mobile phone, a tablet computer, a laptop computer, an on-board communication device, a wireless sensor, a network card, an internet of things terminal, an RFID terminal, an NB-IOT terminal, a machine type communication (Machine Type Communication, MTC) terminal, an enhanced MTC (enhanced MTC, eMTC) terminal, a data card, a network card, an on-board communication device, a low-cost mobile phone, a low-cost tablet computer, and other wireless communication devices. The base stations or system devices each in this application include, but are not limited to a macro cellular base station, a micro cellular base station, a home base station, a relay base station, a gNB (NR nodeB) NR nodeB, a transmitter receiver point (Transmitter Receiver Point, TRP), and other wireless communication devices.

A person skilled in the art should understand that the present disclosure may be implemented through other specified forms that do not deviate from its core or basic features. Therefore, the presently disclosed embodiments are illustrative, but are not limiting. The scope of the present disclosure is determined by the appended claims rather than the foregoing description, and all modifications within the meaning and range of equivalents are intended to be included within the scope of the appended claims.

## Claims

1. A first node for wireless communication, comprising:
a first receiver, receiving a first message, wherein the first message is used to indicate a first CSI-IM resource set, and the first CSI-IM resource set comprises a first CSI-IM resource; and performing an interference measurement in the first CSI-IM resource;
a first transmitter, sending a first CSI;
wherein the interference measurement performed in the first CSI-IM resource is used to calculate the first CSI; and a frequency domain resource occupied by the first CSI-IM resource comprises at least two RB sets, each of the at least two RB sets comprises a plurality of consecutive RBs in a frequency domain, and any two RB sets in the at least two RB sets are nonconsecutive in the frequency domain.

2. The first node according to claim 1, wherein each of the at least two RB sets is indicated by a CSI-FrequencyOccupation.

3. The first node according to any one of claims 1 and 2, wherein the first CSI-IM resource set comprises a second CSI-IM resource, the second CSI-IM resource occupies only one RB set, and the one RB set comprises a plurality of consecutive RBs.

4. The first node according to any one of claims 1 to 3, comprising:
the first transmitter, sending a second message;
wherein the second message is used to determine a configuration of the first CSI-IM resource, and the second message is used to indicate a capability of a first node.

5. The first node according to any one of claims 1 to 4, comprising:
the first receiver, receiving a third message;
wherein the third message is used to indicate a first reporting configuration, the first reporting configuration is applied to the first CSI; and the first reporting configuration indicates that a CSI for a first frequency domain resource is reported, and the first frequency domain resource comprises at least one RB that does not belong to the frequency domain resource occupied by the first CSI-IM resource.

6. The first node according to claim 5, wherein the third message is used to indicate a first CSI-RS resource set, the first CSI-RS resource set comprises a first CSI-RS resource, and a measurement in the first CSI-RS resource is used to calculate the first CSI; and frequency domain resources spanned by the first CSI-RS resource are a plurality of consecutive RBs.

7. A second node for wireless communication, comprising:
a second transmitter, sending a first message, wherein the first message is used to indicate a first CSI-IM resource set, and the first CSI-IM resource set comprises a first CSI-IM resource;
a second receiver, receiving a first CSI;
wherein an interference measurement performed in the first CSI-IM resource is used to calculate the first CSI; and a frequency domain resource occupied by the first CSI-IM resource comprises at least two RB sets, each of the at least two RB sets comprises a plurality of consecutive RBs in a frequency domain, and any two RB sets in the at least two RB sets are nonconsecutive in the frequency domain.

8. The second node according to claim 7, comprising:
the second receiver, receiving a second message;
wherein the second message is used to determine a configuration of the first CSI-IM resource, and the second message is used to indicate a capability of a first node.

9. The second node according to claim 7 or 8, wherein each of the at least two RB sets is indicated by a CSI-FrequencyOccupation.

10. The second node according to any one of claims 7 to 9, wherein the first CSI-IM resource set comprises a second CSI-IM resource, the second CSI-IM resource occupies only one RB set, and the one RB set comprises a plurality of consecutive RBs.

11. The second node according to any one of claims 7 to 10, comprising:
the second transmitter, sending a third message;
wherein the third message is used to indicate a first reporting configuration, the first reporting configuration is applied to the first CSI; and the first reporting configuration indicates that a CSI for a first frequency domain resource is reported, and the first frequency domain resource comprises at least one RB that does not belong to the frequency domain resource occupied by the first CSI-IM resource.

12. The second node according to claim 11, wherein the third message is used to indicate a first CSI-RS resource set, the first CSI-RS resource set comprises a first CSI-RS resource, and a measurement in the first CSI-RS resource is used to calculate the first CSI; and frequency domain resources spanned by the first CSI-RS resource are a plurality of consecutive RBs.

13. A method used in a first node for wireless communication, comprising:
receiving a first message, wherein the first message is used to indicate a first CSI-IM resource set, and the first CSI-IM resource set comprises a first CSI-IM resource;
performing an interference measurement in the first CSI-IM resource;
sending a first CSI;
wherein the interference measurement performed in the first CSI-IM resource is used to calculate the first CSI; and a frequency domain resource occupied by the first CSI-IM resource comprises at least two RB sets, each of the at least two RB sets comprises a plurality of consecutive RBs in a frequency domain, and any two RB sets in the at least two RB sets are nonconsecutive in the frequency domain.

14. The method used in a first node according to claim 13, comprising:
sending a second message;
wherein the second message is used to determine a configuration of the first CSI-IM resource, and the second message is used to indicate a capability of a first node.

15. The method used in a first node according to claim 13 or 14, wherein each of the at least two RB sets is indicated by a CSI-FrequencyOccupation.

16. The method used in a first node according to any one of claims 13 to 15, wherein the first CSI-IM resource set comprises a second CSI-IM resource, the second CSI-IM resource occupies only one RB set, and the one RB set comprises a plurality of consecutive RBs.

17. The method used in a first node according to any one of claims 1 to 4, comprising:
receiving a third message;
wherein the third message is used to indicate a first reporting configuration, the first reporting configuration is applied to the first CSI; and the first reporting configuration indicates that a CSI for a first frequency domain resource is reported, and the first frequency domain resource comprises at least one RB that does not belong to the frequency domain resource occupied by the first CSI-IM resource.

18. The method used in a first node according to claim 17, wherein the third message is used to indicate a first CSI-RS resource set, the first CSI-RS resource set comprises a first CSI-RS resource, and a measurement in the first CSI-RS resource is used to calculate the first CSI; and frequency domain resources spanned by the first CSI-RS resource are a plurality of consecutive RBs.

19. A method used in a second node for wireless communication, comprising:
sending a first message, wherein the first message is used to indicate a first CSI-IM resource set, and the first CSI-IM resource set comprises a first CSI-IM resource;
receiving a first CSI;
wherein the interference measurement performed in the first CSI-IM resource is used to calculate the first CSI; and a frequency domain resource occupied by the first CSI-IM resource comprises at least two RB sets, each of the at least two RB sets comprises a plurality of consecutive RBs in a frequency domain, and any two RB sets in the at least two RB sets are nonconsecutive in the frequency domain.

20. The method used in a second node according to claim 19, comprising:
receiving a second message;
wherein the second message is used to determine a configuration of the first CSI-IM resource, and the second message is used to indicate a capability of a first node.

21. The method used in a second node according to claim 19 or 20, wherein each of the at least two RB sets is indicated by a CSI-FrequencyOccupation.

22. The method used in a second node according to any one of claims 19 to 21, wherein the first CSI-IM resource set comprises a second CSI-IM resource, the second CSI-IM resource occupies only one RB set, and the one RB set comprises a plurality of consecutive RBs.

23. The method used in a second node according to any one of claims 19 to 22, comprising:
sending a third message;
wherein the third message is used to indicate a first reporting configuration, the first reporting configuration is applied to the first CSI; and the first reporting configuration indicates that a CSI for a first frequency domain resource is reported, and the first frequency domain resource comprises at least one RB that does not belong to the frequency domain resource occupied by the first CSI-IM resource.

24. The method used in a second node according to claim 23, wherein the third message is used to indicate a first CSI-RS resource set, the first CSI-RS resource set comprises a first CSI-RS resource, and a measurement in the first CSI-RS resource is used to calculate the first CSI; and frequency domain resources spanned by the first CSI-RS resource are a plurality of consecutive RBs.
